# EUROPEAN PATENT SPECIFICATION

(11) **EP 3 246 471 B1**
(45) Date of publication and mention of the grant of the patent: **07.12.2022**
(21) Application number: 17171379.5
(22) Date of filing: 16.05.2017
(51) Int. Cl.: E02D 25/00, E02D 27/42

(54) **DEVICE AND METHOD FOR CONNECTING A HOLLOW TUBULAR STRUCTURE IN ERECTED STATE TO A WORK OF A FLOATING DEVICE**
VORRICHTUNG UND VERFAHREN ZUR VERBINDUNG EINER HOHLEN ROHRFÖRMIGEN STRUKTUR IN ERRICHTETEM ZUSTAND MIT EINEM WERK EINER SCHWIMMENDEN VORRICHTUNG
DISPOSITIF ET PROCÉDÉ DE CONNEXION D'UNE STRUCTURE TUBULAIRE CREUSE DANS UN ÉTAT DÉPLOYÉ À UN TRAVAIL D'UN DISPOSITIF FLOTTANT

(30) Priority: 20.05.2016 BE 201605371
(43) Date of publication of application: 22.11.2017
(73) Proprietor: DEME Offshore BE N.V., 2070 Zwijndrecht (BE)
(72) Inventor: Rabaut, Dieter, B9000 Gent (BE); Nekeman, Sebastian, 4819 AM Breda (BE)
(74) Representative: Brouwer, Hendrik Rogier

(56) References cited:
- EP-A1- 2 913 439
- EP-A1- 3 144 213
- WO-A2-2015/190919
- NL-C- 2 005 087
- US-A- 5 653 556
- US-B1- 7 824 132

## Description

### TECHNICAL FIELD OF THE INVENTION

The invention relates to an assembly and to method for connecting a hollow tubular structure in erected state to a work deck of a floating device.

The invention will be elucidated hereinbelow in the light of the offshore placing of a wind turbine. The reference to a wind turbine does not imply that the invention is limited to the use in the context of such a wind turbine. The device and method can in principle be applied to any hollow tubular structure which has to be transported over sea in erected state.

### BACKGROUND OF THE INVENTION

An offshore wind turbine is generally placed on a support structure which is anchored to the seabed in any way. The support structure is configured to bridge the distance from the seabed to a position above the water surface and can be embodied in different ways. The support structure can thus comprise a single pile (a monopile) or be embodied as a lattice structure, also referred to as jacket. The support structure has to be anchored to the bottom in any way, wherein a pile foundation is common. The foundation piles are connected to the support structure on an underside of the support structure, for instance by means of a grouted connection.

Another type of foundation relates to the use of so-called suction buckets. Such suction buckets are arranged on an underside of the legs of a jacket, wherein the bucket openings are directed toward the seabed. Once the suction buckets mounted on the jacket have been lowered onto the seabed, the contents of the suction buckets are placed under a vacuum, wherein the suction buckets are suctioned onto the seabed or other underwater bottom. The jacket is in this way anchored to the seabed.

Suction buckets are hollow tubular structures which can have sizable dimensions, with diameters of as much as 10 m and more. The wall thickness of the suction buckets is however limited in proportion to the diameter and height thereof, for instance in the range of only tens of mm. The limited wall thickness makes the suction buckets susceptible to buckling, particularly when the suction buckets are loaded out of the plane of their wall.

Hollow tubular structures with a certain length are generally transported over sea in erected state.

In a known method a jacket of a wind turbine provided with suction buckets is lifted onto the deck of a transport vessel and fixed onto the work deck of the vessel by welding lower peripheral edges of the suction buckets to the work deck. After arrival at the intended offshore location, the welds are broken and the jacket provided with suction buckets can be taken up and placed on the seabed.

The known method has the drawback, among others, that the suction buckets are subject to loads out of the plane of the suction bucket walls during transport. This may result in local buckling and other damage, inter alia because a slightly deformed tubular structure is highly susceptible to buckling.

US5653556A discloses a clamping device for vibrating of piles.

### SUMMARY OF THE INVENTION

The present invention has for its object to provide an assembly for connecting a hollow tubular structure in erected state to a work deck of a floating device, wherein the above stated drawbacks of the prior art are at least partially obviated.

According to the invention, this object is achieved by providing an assembly according to claim 1.

The clamping parts ensure that the hollow tubular structure is connected to the work deck, wherein axial forces directed as according to a longitudinal direction of the tubular structure are absorbed, while forces which at the same time run in radial direction (which thus run out of the plane of the wall of the tubular structure) remain substantially zero. This is because the clamping parts can move freely over the guide in this radial direction. In the context of this application, moving freely over the guide is understood to mean that the clamping parts can co-displace freely with movements of the tubular structure in the radial direction. In practice these will be relatively small movements which, if obstructed, as is the case in the prior art, can however cause high stresses in the tubular structure. It will be evident that the freedom of movement of the clamping parts in the radial direction is limited to some extent in practice, for instance by friction between the clamping parts and the guide.

In order to enhance the clamping of the tubular structure, in an embodiment of the invention a clamping surface of at least one clamping part is curved such that in the clamping position it connects to the wall part. It is more preferable that a clamping surface of two clamping parts is curved such that in the clamping position it connects to the wall part.

In order to further enhance the clamping, another embodiment of the invention is characterized in that at least one clamping part is provided on a clamping side with a wooden covering, a surface of which forms the clamping surface. Two clamping parts are more preferably provided on a clamping side with a wooden covering, a surface of which forms the clamping surface. Wood has a coefficient of static friction with steel which is well adapted to the intended object.

In order to provide a good and reliable sliding connection between the clamping parts and the guide, in an embodiment the clamping parts comprise a recess which engages on the guide. Movements in directions varying from the direction in which the guide runs are in this way prevented or at least impeded.

The guide of the device can be connected to the work deck of the floating device in any way. A practical embodiment is obtained by a device comprising a support frame for the clamping parts which can be connected to the work deck. The support frame can be connected to the work deck in any way, such as for instance by welding or bolts.

In an embodiment the guide for the clamping parts is formed by at least one structural beam of the support frame. Such a structural beam provides support for the clamping parts and at the same time a freedom of movement provided in the radial direction. The structural beam in question generally has a longitudinal direction running parallel to the radial direction of a cross-section of a tubular structure clamped in the device.

The clamping parts can move over slide surfaces of the guide, although according to an embodiment of the invention it is also possible to provide a device wherein the guide comprises a rail guide.

The device further comprises clamping means for shifting the clamping parts toward each other over the guide in the radial direction from an open position into a clamping position, in which a wall part of the structure is clamped between the clamping parts. The clamping means can be embodied in any way known to the skilled person and can be of mechanical nature or comprise hydraulic components. According to an embodiment, the clamping means comprise jacks acting on end surfaces of the clamping parts and/or a nut and lead screw connection.

If desired, the assembly according to the invention can be used per se for clamping a wall part of a tubular structure so as to connect this latter to the work deck of the floating device, device, for instance for the purpose of transport over sea.

According to the invention an assembly of at least two devices according to the invention is provided, wherein the devices are positioned along the periphery of a cross-section of the tubular structure such that they can clamp wall parts of the same hollow tubular structure in erected state in the radial direction. In a suitable arrangement of the devices they are placed along the periphery of a cross-section of the tubular structure. The clamping surfaces of the clamping parts then run substantially in the peripheral direction of the cross-section of the tubular structure.

The devices are also able to absorb axial forces on the structure. These forces occurring in the longitudinal direction of the structure, for instance as a result of the force of gravity, are transmitted via the guide to the work deck. In order to ensure that the sliding of the clamping parts over the guide is not impeded too much by axial load, the inventive assembly further comprises support elements supported by the work deck for supporting a lower edge of the tubular structure. The support elements are situated at positions along the periphery of the tubular structure which are not taken up by the devices.

An advantageous embodiment of the assembly is characterized in that the devices and/or the support elements are distributed regularly over the periphery of the cross-section of the tubular structure.

The number of devices in an assembly can be chosen freely and amounts to more than two, preferably three, and most preferably four devices.

With the assembly according to the invention a tubular structure in erected state can be connected to the work deck of a floating device, wherein the risk of damage to the structure is reduced relative to known methods. Provided in another aspect of the invention is a combination of the inventive assembly and a hollow tubular structure connected to the work deck with the clamping parts.

A particularly suitable embodiment comprises a combination wherein the tubular structure comprises the suction buckets of a suction bucket jacket for a wind turbine.

The dimensions of the tubular structure are in principle of lesser importance, but the advantages of the invention also become particularly manifest for tubular structures with a relatively thin wall. The invention is thus particularly advantageous for clamping tubular structures with a wall thickness/diameter ratio which is smaller than 1/10, more preferably smaller than 5/100, still more preferably smaller than 1/100 and most preferably smaller than 5/1000. The invention is further advantageous for clamping tubular structures with a length/diameter ratio which is greater than 1/10, more preferably greater than 5/10, still more preferably greater than 1 and most preferably greater than 2.

In another aspect of the invention a method according to claim 10 is provided.

In preferred embodiments of the method a plurality of devices and/or support elements according to the inventive assembly are positioned along the periphery of a cross-section of the tubular structure such that they can clamp wall parts of the same hollow tubular structure in erected state in the radial direction; a lower edge of the tubular structure is supported by a number of support elements which are supported by the work deck; the devices and/or the support elements are divided regularly over the periphery of the cross-section of the tubular structure; the method comprises of applying four devices; and the method is applied for connecting suction buckets of a suction bucket jacket for a wind turbine to the work deck.

### BRIEF DESCRIPTION OF THE FIGURES

The invention will now be elucidated in more detail with reference to the accompanying figures, without otherwise being limited thereto. In the figures:
Fig. 1 shows a schematic perspective view of a wind turbine which is placed on a jacket foundation provided with suction buckets;
Fig. 2 shows a schematic perspective view of an embodiment of a suction bucket;
Fig. 3 shows a schematic perspective view of an assembly of devices according to an embodiment of the invention;
Fig. 4 shows a schematic perspective view of a support frame of the device according to an embodiment of the invention;
Fig. 5A shows a schematic perspective view of a first clamping part of the device according to an embodiment of the invention;
Fig. 5B shows a schematic perspective view of a second clamping part of the device according to an embodiment of the invention co-acting with the first clamping part of figure 5A; and finally
Fig. 6 shows a schematic side and top view of a suction bucket clamped with devices according to the invention, with an indication of the forces acting thereon.

### DETAILED DESCRIPTION OF EXEMPLARY EMBODIMENTS

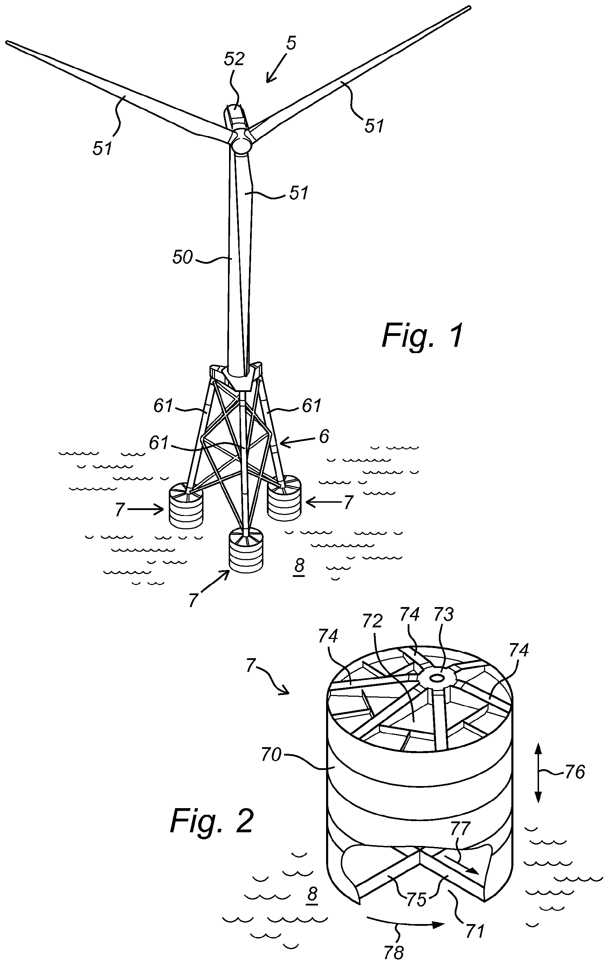

Referring to figure 1, an offshore wind turbine 5 is shown which is placed on a support structure in the form of a lattice structure designated as jacket 6. The wind turbine comprises a mast 50 on which a hub 52 is arranged. Hub 52 carries a rotor provided with three wind turbine blades 51. Jacket 6 bridges the distance between seabed 8 and a position above the water surface where jacket 6 is connected to mast 50 of the wind turbine. Jacket 6 comprises three legs 61 which are provided on an underside with so-called suction buckets 7. Figure 2 shows a suction bucket 7 forming a tubular structure extending in a longitudinal or axial direction 76 and having a radial direction 77 running perpendicularly of a peripheral wall 70. Bucket openings 71 of suction buckets 7 are directed toward seabed 8 during use. Each suction bucket 7 is provided on an upper side facing away from the seabed of peripheral wall 70 with a closing plate (bucket bottom) 72. Closing plate72 is further provided with a connection 73 for a jacket leg 61. Connection 73 is placed eccentrically relative to the axis of suction bucket 7 in order to accommodate the obliquely running legs 61. Stiffening ribs 74 transmit the forces acting on jacket 6 via a peripheral wall 70 to seabed 8. Bucket opening 71 can optionally be strengthened with radially running stiffening ribs 75.

The jacket 6 provided with a number of suction buckets 7 is lowered onto seabed 8 during use, after which an internal space of suction buckets 7 is placed under a vacuum. In this way suction buckets 7 are suctioned onto or into seabed 8, whereby jacket 6 is anchored to seabed 8.

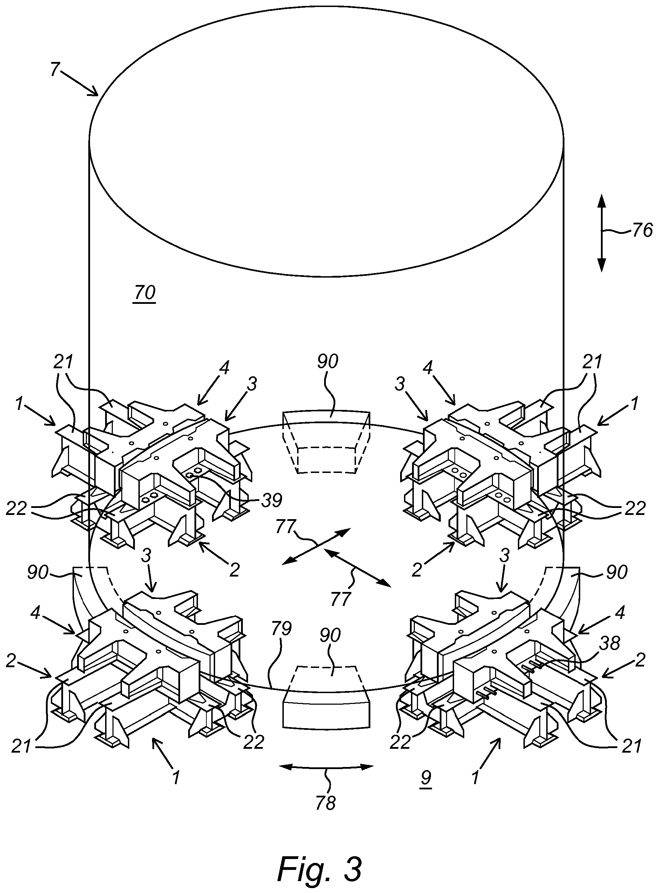

Referring to figure 3, an assembly is shown of devices 1 according to an embodiment of the invention. Each device 1 comprises two clamping parts (3, 4) which are connected to work deck 9 of a vessel (not shown) by means of I-profiles 21 running in a radial direction 77 of a clamped suction bucket 7 (shown transparently) and serving as guide for the clamping parts (3, 4).

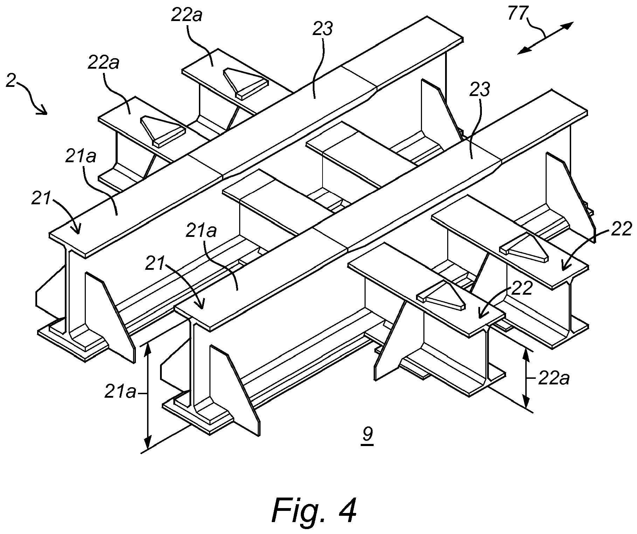

In the shown embodiment the connection of the clamping parts (3, 4) to work deck 9 is realized by a support frame 2 which comprises the guide (I-profiles 21) and which is shown in more detail in figure 4. Support frame 2 comprises a cross of two pairs of I-profiles (21, 22), wherein the I-profiles 21 which run in the radial direction 77 during use have a greater height 21a than the height 22a of the I-profiles 22 running in the peripheral direction 78 of suction bucket 7 during use. The I-profiles (21, 22) can for instance be mutually connected by a welded connection. Support frame 2 can for instance be anchored to work deck 9 with a bolt connection. For the shown embodiment it is important to fix each support frame 2 to work deck 9 at the correct position. The assembly of devices 1 indeed has to be positioned such that the devices can clamp wall parts of the same suction bucket 7 in erected state in radial direction 77. The placing depends, among other factors, on the dimensions of suction bucket 7.

Referring to figure 3, clamping parts 3 and 4 of each device 1 are arranged on support frame 2, wherein the two parts (3, 4) can slide in radial direction 77 over the I-profiles 21 functioning as guide. Lower surfaces of the clamping parts (3, 4) here slide over the upper side of the upper flange plates of I-profiles 21. In order to facilitate the sliding, the upper flange plates of the I-profiles can be provided over a determined length with slide surfaces 23 of a material with a relatively low coefficient of static friction. It is also possible to provide the upper side of the upper flange plates of the I-profiles with a rail guide (not shown).

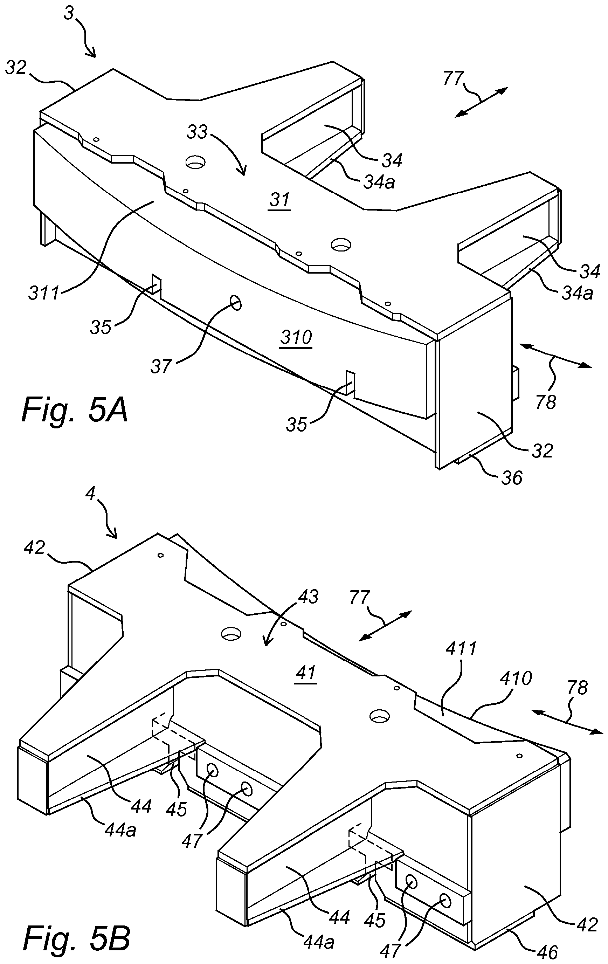

Referring to figures 5A and 5B, a set of co-acting clamping parts (3, 4) is shown. An inner clamping part 3 shown in figure 5A is situated on an inner side of suction bucket 7 during use, while an outer clamping parts 3 shown in figure 5B is situated on an outer side of suction bucket 7 during use. In respect of the main features and with the exception of the coverings (311, 411), the two parts are embodied identically so that the rear side of inner clamping part 4, which is invisible in figure 5A, corresponds to the rear side of outer clamping part 4, which is visible in figure 5B.

Each clamping part (3, 4) comprises substantially a transverse beam (33, 43) which is constructed from an upper plate (31, 41), a lower plate (36, 46) and side plates (32, 42) and which is provided with two I-profiles (34, 44) which have tapering flange plates and which are positioned perpendicularly of the beam and are directed to the rear. In a situation in which they are coupled to support frame 2, lower surfaces of the lower flange plates (34a, 44a) of the I-profiles (34, 44) here slide over upper surfaces of the upper flange plates 21a of I-profiles 21. If desired, the lower surfaces of the lower flange plates (34a, 44a) are provided with slide surfaces (not shown). As shown with broken lines in figure 5B, a recess (35, 45) in which an upper flange plate 21a of support frame 2 can be received is arranged on an underside of each clamping part (3, 4). In this way the clamping parts (3, 4) and support frame 2 can be coupled to each other in sliding manner, at least in the radial direction 77. A rigid coupling between the clamping parts (3, 4) and support frame 2 is obtained in the peripheral direction 78.

Lower surfaces of the lower plates (36, 46) of the clamping parts (3, 4) support on upper surfaces of the upper flange plates 22a of the I-profiles 22 of support frame 2. This is achieved in that the lower surfaces of the lower flange plates 44a of I-profiles 44 run at a greater height than the lower surfaces of the lower plates (36, 46) of the clamping parts (3, 4). This height difference is substantially equal to the height difference between the upper surfaces of the I-profiles 21 and 22 of support frame 2.

The clamping parts (3, 4) are configured to connect with a clamping surface (310, 410) against a wall part of suction bucket 7. Each clamping surface (310, 410) can for this purpose be curved such that in the clamping position it connects properly to the wall part. A simple manner of achieving this is to provide the clamping parts (3, 4) on their clamping side with a wooden covering (311, 411), a surface of which forms the clamping surface (310, 410). The coefficient of static friction of wood provides for a good clamping of the generally steel wall part of suction bucket 7.

In order to enable the clamping parts (3, 4) to be shifted in radial direction 77 relative to each other over the guide in the form of I-profile 21, the clamping parts (3, 4) are provided with clamping means (37, 47, 38, 39). An embodiment comprises openings (37, 47) which are arranged in radial direction 77 through the clamping parts (3, 4) and in which lead screws 38 (see figure 3) are received. With nuts 39 arranged on lead screws 38 (see figure 3) and lying against end surfaces of the clamping parts (3, 4), the clamping parts (3, 4) can be shifted along the lead screws (38, 48) by tightening or loosening of nuts 51. The clamping parts (3, 4) here shift toward each other from an open position, wherein a lower edge of a suction bucket 7 can be placed between the clamping parts, into a clamping position in which a wall part of suction bucket 7 is clamped between the clamping parts (3, 4). Because in the clamping position the clamping parts (3, 4) can collectively be moved freely over the guide in the radial direction 77, substantially no forces are exerted on suction bucket 7 in radial direction 77, with the exception of clamping forces.

According to the embodiment shown in figure 3, four devices 1 according to the invention are applied, wherein they are divided regularly over the periphery of the cross-section of suction bucket 7. It is also possible to apply only three devices 1, or conversely more than four. Support elements 90 supported by work deck 9 can if desired be applied between devices 1. Suitable support elements 90 comprise wooden blocks or pallets which have been slid under suction bucket 7 and which support a lower edge 79 of suction bucket 7. The generally considerable axial forces in the longitudinal direction 76 of suction bucket 7, generated by the force of gravity, can thus be absorbed. Support elements 90 are preferably also divided regularly over the periphery of the cross-section of suction bucket 7.

With an assembly of devices 1 as shown in the figures a suction bucket 7 in erected state can be connected to work deck 9 of a transport vessel (not shown). The clamping parts (3, 4) are for this purpose placed in an open position by rotating nuts 39 of lead screws 38. Suction bucket 7 is then taken up with a suitable crane (not shown) and wall parts of suction bucket 7 are placed between the clamping parts (3, 4). The clamping parts (3, 4) are then shifted over the I-profiles in sliding manner in radial direction 77 into a clamping position, in which a wall part of suction bucket 7 is clamped between the covering (311, 411) of the clamping parts (3, 4). A lower edge 79 of suction bucket 7 is optionally further supported by arranging a number of support elements 90 on the work deck.

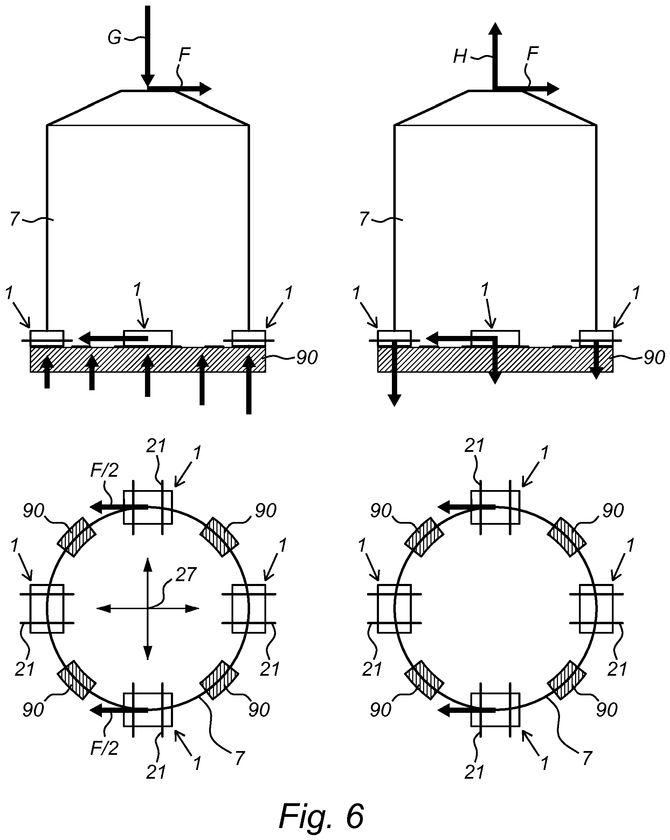

The above described manner of connecting prevents great forces from occurring out of the plane of the suction bucket wall during transport of the jacket 6 provided with suction buckets 7. Referring to figure 6, a lateral load F exerted on a suction bucket 7 is shown in combination with a downward force G on the left-hand side, whereas a lateral load F exerted on a suction bucket 7 is shown in combination with an upward lifting force H on the right-hand side. The downward force G is substantially compensated by wood blocks 90, while the lateral load F is absorbed by the two clamping devices 1 which in top view are situated at 12 o'clock and 6 o'clock (each absorbing half of the load F/2). Only these clamping devices are thus active in this respect, as they are placed perpendicularly of the guide (I-profiles 21) relative to the direction of the force F. Clamping devices 1 which in top view are situated at 3 o'clock and 9 o'clock will absorb substantially no load, but will slide freely along the guide (I-profiles 21) and have a freedom of movement in that direction.

The same principle of the lateral load reaction forces applies on the right-hand side but, other than the lateral load absorbed by two clamps, the upward force will be introduced into all four clamps.

## Claims

1. An assembly comprising at least two devices (1) and a floating device having a work deck (9) for connecting a hollow tubular structure (7) in erected state to the work deck (9), which hollow tubular structure extends in a longitudinal direction and defines a radial direction (77) running perpendicularly of a peripheral wall of the hollow tubular structure (7), each device (1) comprising two clamping parts (3, 4), a guide (21) configured to run in the installed state in the radial direction (77) of the hollow tubular structure (7) when the hollow tubular structure (7) is connected to the work deck (9), and the guide (21) is further configured to connect the clamping parts (3, 4) to the work deck (9), and each device further comprising clamping means (37, 47, 38, 39) for shifting the clamping parts (3, 4) toward each other over the guide (21) in the radial direction (77) from an open position into a clamping position, in which a wall part of the structure (7) is clamped between the clamping parts (3, 4), wherein in the clamping position the clamping parts (3, 4) can collectively be moved freely over the guide (21) in the radial direction (77), wherein the at least two devices (1) of the assembly are connected on the work deck (9) of the floating device along the periphery of a cross-section of the hollow tubular structure (7) when the hollow tubular structure (7) is connected to the work deck (9), which allows clamping wall parts of the same hollow tubular structure (7) in erected state in the radial direction (77), and the assembly further comprises support elements (90) supported by the work deck for supporting a lower edge (79) of the tubular structure (7).

2. Assembly according to claim 1, wherein a clamping surface of at least one clamping part (3, 4) is curved such that in the clamping position it connects to the wall part.

3. Assembly according to claim 2, wherein at least one clamping part (3, 4) is provided on a clamping side with a wooden covering, a surface of which forming the clamping surface.

4. Assembly according to any one of the foregoing claims, wherein the clamping parts (3, 4) comprise a recess which engages on the guide (21).

5. Assembly according to any one of the foregoing claims, further comprising a support frame for the clamping parts (3, 4) which support frame is connected to the work deck.

6. Assembly according to any one of the foregoing claims, wherein the guide (21) comprises a rail guide.

7. Assembly according to any one of the preceding claims, wherein the devices and/or the support elements are distributed regularly over the periphery of the cross-section of the hollow tubular structure, when in mounted state the hollow tubular structure is connected to the work deck (9).

8. A combination of an assembly according to any of claims 1 to 7 and a hollow tubular structure, wherein the hollow tubular structure is clamped to the work deck (9) of the floating device by the clamping parts (3, 4).

9. A combination according to claim 8, wherein the hollow tubular structure comprises suction buckets of a suction bucket jacket for a wind turbine.

10. Method of connecting a hollow tubular structure (7) in erected state to a work deck (9) of a floating device, comprising the steps of:
- providing an assembly according to any one of the preceding claims 1 to 7;
- placing the clamping parts (3, 4) of each device (1) in the open position;
- taking up the hollow tubular structure (7) in erected state and placing wall parts of the structure (7) between the clamping parts (3, 4);
- using the clamping means (37, 47, 38, 39) to shift the clamping parts (3, 4) toward each other over the guide (21) in the radial direction (77) from the open position into a clamping position, in which a wall part of the hollow tubular structure (7) is clamped between the clamping parts (3, 4), wherein in the clamping position the clamping parts (3, 4) collectively move freely over the guide (21) in the radial direction (77),
- wherein a lower edge (79) of the hollow tubular structure (7) is supported by a number of support elements (90) which are supported by the work deck (9).

11. Method according to claim 10, wherein the devices and/or the support elements are divided regularly over the periphery of the cross-section of the hollow tubular structure.

12. Method according to any one of the claims 10-11, wherein the hollow tubular structure comprises a suction bucket of a suction bucket jacket for a wind turbine.

## Patentansprüche

1. Baugruppe mit mindestens zwei Vorrichtungen (1) und einer schwimmenden Vorrichtung mit einem Arbeitsdeck (9) zum Verbinden einer hohlen rohrförmigen Struktur (7) in errichtetem Zustand mit dem Arbeitsdeck (9), wobei sich die hohle rohrförmige Struktur in einer Längsrichtung erstreckt und eine radiale Richtung (77) definiert, die senkrecht von einer Umfangswand der hohlen rohrförmigen Struktur (7) verläuft, wobei jede Vorrichtung (1) zwei Klemmteile (3, 4) aufweist, wobei eine Führung (21) derart ausgeführt ist, dass sie im eingebauten Zustand in der radialen Richtung (77) der hohlen rohrförmigen Struktur (7) verläuft, wenn die hohle rohrförmige Struktur (7) mit dem Arbeitsdeck (9) verbunden ist, und die Führung (21) weiterhin so ausgeführt ist, dass sie die Klemmteile (3, 4) mit dem Arbeitsdeck (9) verbindet, und wobei jede Vorrichtung weiterhin Klemmeinrichtungen (37, 47, 38, 39) zum Verschieben der Klemmteile (3, 4) zueinander über die Führung (21) in der radialen Richtung (77) von einer offenen Stellung in eine Klemmstellung aufweist, in der ein Wandteil der Struktur (7) zwischen den Klemmteilen (3, 4) festgeklemmt ist, wobei die Klemmteile (3, 4) in der Klemmstellung gemeinsam frei über die Führung (21) in der Radialrichtung (77) bewegt werden können, wobei die mindestens zwei Vorrichtungen (1) der Baugruppe auf dem Arbeitsdeck (9) der schwimmenden Vorrichtung entlang des Umfangs eines Querschnitts der hohlen rohrförmigen Struktur (7) verbunden sind, wenn die hohle rohrförmige Struktur (7) mit dem Arbeitsdeck (9) verbunden ist, wodurch Wandteile derselben hohlen rohrförmigen Struktur (7) im errichteten Zustand in der radialen Richtung (77) festgeklemmt werden können, und die Baugruppe weiterhin Stützelemente (90) aufweist, die durch das Arbeitsdeck abgestützt werden, um eine Unterkante (79) der rohrförmigen Struktur (7) abzustützen.

2. Baugruppe nach Anspruch 1, wobei eine Klemmfläche mindestens eines Klemmteils (3, 4) derart gekrümmt ist, dass sie sich in der Klemmstellung mit dem Wandteil verbindet.

3. Baugruppe nach Anspruch 2, wobei mindestens ein Klemmteil (3, 4) auf einer Klemmseite mit einer Holzverkleidung versehen ist, deren Oberfläche die Klemmfläche bildet.

4. Baugruppe nach einem der vorhergehenden Ansprüche, wobei die Klemmteile (3, 4) eine Vertiefung aufweisen, welche in die Führung (21) eingreift.

5. Baugruppe nach einem der vorhergehenden Ansprüche, weiterhin mit einem Stützrahmen für die Klemmteile (3, 4), wobei der Stützrahmen mit dem Arbeitsdeck verbunden ist.

6. Baugruppe nach einem der vorhergehenden Ansprüche, wobei die Führung (21) eine Schienenführung aufweist.

7. Baugruppe nach einem der vorhergehenden Ansprüche, wobei die Vorrichtungen und/oder die Stützelemente regelmäßig über den Umfang des Querschnitts der hohlen rohrförmigen Struktur verteilt sind, wenn die hohle rohrförmige Struktur im montierten Zustand mit dem Arbeitsdeck (9) verbunden ist.

8. Kombination einer Baugruppe nach einem der Ansprüche 1 bis 7 und einer hohlen rohrförmigen Struktur, wobei die hohle rohrförmige Struktur durch die Klemmteile (3, 4) am Arbeitsdeck (9) der schwimmenden Vorrichtung festgeklemmt ist.

9. Kombination nach Anspruch 8, wobei die hohle rohrförmige Struktur Suction Buckets eines Suction Bucket Jacket für eine Windkraftanlage aufweist.

10. Verfahren zum Verbinden einer hohlen rohrförmigen Struktur (7) in errichtetem Zustand mit einem Arbeitsdeck (9) einer schwimmenden Vorrichtung, mit den Schritten:
- Bereitstellen einer Baugruppe nach einem der vorhergehenden Ansprüche 1 bis 7;
- Platzieren der Klemmteile (3, 4) jeder Vorrichtung (1) in der offenen Stellung;
- Aufnehmen der hohlen rohrförmigen Struktur (7) in errichtetem Zustand und Platzieren von Wandteilen der Struktur (7) zwischen den Klemmteilen (3, 4);
- Verwenden der Klemmeinrichtungen (37, 47, 38, 39), um die Klemmteile (3, 4) über die Führung (21) in der radialen Richtung (77) zueinander von der offenen Stellung in eine Klemmstellung zu verschieben, in der ein Wandteil der hohlen rohrförmigen Struktur (7) zwischen den Klemmteilen (3, 4) festgeklemmt wird, wobei sich die Klemmteile (3, 4) in der Klemmstellung gemeinsam frei über die Führung (21) in der radialen Richtung (77) bewegen,
- wobei eine Unterkante (79) der hohlen rohrförmigen Struktur (7) durch eine Reihe von Stützelementen (90) abgestützt wird, welche durch das Arbeitsdeck (9) abgestützt werden.

11. Verfahren nach Anspruch 10, wobei die Vorrichtungen und/oder die Stützelemente regelmäßig über den Umfang des Querschnitts der hohlen rohrförmigen Struktur verteilt sind.

12. Verfahren nach einem der Ansprüche 10 bis 11, wobei die hohle rohrförmige Struktur einen Suction Bucket eines Suction Bucket Jacket für eine Windkraftanlage aufweist.

## Revendications

1. Ensemble comprenant au moins deux dispositifs (1) et un dispositif flottant ayant un pont de travail (9) pour la liaison d'une structure tubulaire creuse (7) dans un état érigé au pont de travail (9), laquelle structure tubulaire creuse s'étend dans une direction longitudinale et définit une direction radiale (77) passant perpendiculairement à une paroi périphérique de la structure tubulaire creuse (7), chaque dispositif (1) comprenant deux parties de serrage (3, 4), un guide (21) configuré pour passer, dans l'état installé, dans la direction radiale (77) de la structure tubulaire creuse (7) lorsque la structure tubulaire creuse (7) est reliée au pont de travail (9), et le guide (21) est en outre configuré pour relier les parties de serrage (3, 4) au pont de travail (9), et chaque dispositif comprenant en outre des moyens de serrage (37, 47, 38, 39) pour le décalage des parties de serrage (3, 4) l'une vers l'autre au-dessus du guide (21) dans la direction radiale (77) d'une position ouverte à une position de serrage, dans laquelle une partie de paroi de la structure (7) est serrée entre les parties de serrage (3, 4), dans lequel dans la position de serrage, les parties de serrage (3, 4) peuvent collectivement être déplacées librement au-dessus du guide (21) dans la direction radiale (77), dans lequel les au moins deux dispositifs (1) de l'ensemble sont reliés sur le pont de travail (9) du dispositif flottant le long de la périphérie d'une section transversale de la structure tubulaire creuse (7) lorsque la structure tubulaire creuse (7) est reliée au pont de travail (9), ce qui permet le serrage de parties de paroi de la même structure tubulaire creuse (7) dans l'état érigé dans la direction radiale (77), et l'ensemble comprend en outre des éléments de soutien (90) soutenus par le pont de travail pour le soutien d'un bord inférieur (79) de la structure tubulaire (7).

2. Ensemble selon la revendication 1, dans lequel une surface de serrage d'au moins une partie de serrage (3, 4) est incurvée de sorte que, dans la position de serrage, elle se relie à la partie de paroi.

3. Ensemble selon la revendication 2, dans lequel au moins une partie de serrage (3, 4) est munie, sur un côté de serrage, d'un revêtement en bois, dont une surface forme la surface de serrage.

4. Ensemble selon l'une quelconque des revendications précédentes, dans lequel les parties de serrage (3, 4) comprennent un évidement qui vient en prise sur le guide (21).

5. Ensemble selon l'une quelconque des revendications précédentes, comprenant en outre un cadre de soutien pour les parties de serrage (3, 4), lequel cadre de soutien est relié au pont de travail.

6. Ensemble selon l'une quelconque des revendications précédentes, dans lequel le guide (21) comprend un rail de guidage.

7. Ensemble selon l'une quelconque des revendications précédentes, dans lequel les dispositifs et/ou les éléments de soutien sont répartis uniformément sur la périphérie de la section transversale de la structure tubulaire creuse, lorsque, dans l'état monté, la structure tubulaire creuse est reliée au pont de travail (9).

8. Combinaison d'un ensemble selon l'une quelconque des revendications 1 à 7 et d'une structure tubulaire creuse, dans lequel la structure tubulaire creuse est serrée sur le pont de travail (9) du dispositif flottant par les parties de serrage (3, 4).

9. Combinaison selon la revendication 8, dans laquelle la structure tubulaire creuse comprend des compartiments d'aspiration d'une chemise de compartiment d'aspiration pour une éolienne.

10. Procédé de liaison d'une structure tubulaire creuse (7) dans un état érigé à un pont de travail (9) d'un dispositif flottant, comprenant les étapes de :
- la fourniture d'un ensemble selon l'une quelconque des revendications 1 à 7 précédentes ;
- le placement des parties de serrage (3, 4) de chaque dispositif (1) dans la position ouverte ;
- le soulèvement de la structure tubulaire creuse (7) dans l'état érigé et le placement de parties de paroi de la structure (7) entre les parties de serrage (3, 4) ;
- l'utilisation des moyens de serrage (37, 47, 38, 39) pour décaler les parties de serrage (3, 4) l'une vers l'autre au-dessus du guide (21) dans la direction radiale (77) de la position ouverte à une position de serrage, dans laquelle une partie de paroi de la structure tubulaire creuse (7) est serrée entre les parties de serrage (3, 4), dans lequel, dans la position de serrage, les parties de serrage (3, 4) se déplacent collectivement librement au-dessus du guide (21) dans la direction radiale (77),
- dans lequel un bord inférieur (79) de la structure tubulaire creuse (7) est soutenu par un certain nombre d'éléments de support (90) qui sont soutenus par le pont de travail (9).

11. Procédé selon la revendication 10, dans lequel les dispositifs et/ou les éléments de soutien sont partagés uniformément sur la périphérie de la section transversale de la structure tubulaire creuse.

12. Procédé l'une quelconque des revendications 10 à 11, dans lequel la structure tubulaire creuse comprend un compartiment d'aspiration d'une chemise de compartiment d'aspiration pour une éolienne.
